# EUROPÄISCHE PATENTANMELDUNG

(11) **EP 1 036 991 A2**
(43) Veröffentlichungstag der Anmeldung: **20.09.2000**
(21) Anmeldenummer: 00105544.1
(22) Anmeldetag: 16.03.2000
(51) Int. Cl.: F24D 3/14

(54) **Fixiervorrichtung für Fussbodenheizungsrohre**

(30) Priorität: 18.03.1999 DE 29905001 U
(71) Anmelder: Fritzenwenger, Stefan, 83324 Ruhpolding (DE)
(72) Erfinder: Fritzenwenger, Stefan, 83324 Ruhpolding (DE)
(74) Vertreter: Bauer, Friedrich, Dipl.-Ing.

(57) **Zusammenfassung**

Eine Fixiervorrichtung für Fußbodenheizungsrohre weist ein Halteband (1, 1', 14, 14') auf, auf dem in Längsrichtung beabstandet eine Mehrzahl von Klips (6) zur Halterung der Heizungsrohre (7) befestigbar sind. Die Klips (6) weisen einen Sockel (8, 8') und zwei sich vom Sockel (8, 8') aus nach oben erstreckende, gegenüberliegende Haltelaschen (9) auf. Die Sockel (8, 8') sind in einem Hohlraum (5) des Haltebandes (1, 1', 14, 14') im Bereich zwischen der Oberseite und der unteren Auflageebene des Haltebandes (1, 1', 14, 14') anordenbar.

## Beschreibung

Die Erfindung betrifft eine Fixiervorrichtung für Fußbodenheizungsrohre gemäß dem Oberbegriff des Anspruchs 1.

Fußbodenheizungsrohre werden bekannterweise in einer regelmäßigen Anordnung im Estrich eingebettet. Der Estrich liegt hierbei meist auf einer mittels einer Folie abgedeckten Dämmschicht, die ihrerseits auf der Rohdecke aufliegt.

Um die Fußbodenheizungsrohre auf der Dämmschicht bzw. der Folie ordnungsgemäß anordnen zu können, werden bekannterweise Fixiervorrichtungen verwendet, die aus flachen Haltebändern und Klips bestehen, die an verschiedenen Stellen an den Haltebändern festgeklemmt werden können. Die Klips weisen gegenüberliegende, nach oben vorstehende Haltelaschen auf, die einen U-förmigen Aufnahmeraum für die Heizungsrohre bilden. Die Heizungsrohre werden von oben in die Klips eingedrückt und durch die Federkraft der Haltelaschen festgeklemmt. Bei bekannten Fixiervorrichtungen sind die Haltelaschen auf einem im Querschnitt U-förmigen Sockel befestigt, der auf das Halteband aufgesetzt wird und dieses an den Seiten umgreift. Um ein Verrutschen der Klips auf dem Halteband zu vermeiden, ist am Sockel des Klips ein nach unten vorstehender Arretierdorn vorgesehen, der in eines einer Vielzahl von mittig im Halteband hintereinander angeordneter Löcher eingesetzt werden kann.

Nachteilig ist bei dieser bekannten Fixiervorrichtung, daß der Abstand zwischen der Verlegeebene, d.h. der Folie, und den Heizungsrohren, bedingt durch die hohe Bauart der Fixiervorrichtung, relativ groß ist. Da andererseits Vorschriften existieren, nach denen die Dicke des Estrichs oberhalb der Heizungsrohre ein bestimmtes Mindestmaß nicht unterschreiten darf, führt dies zu einer Erhöhung der Gesamtdicke des Estrichs und damit auch zu einer entsprechenden Kostenerhöhung. Ein weiterer Nachteil der bekannten Fixiervorrichtung liegt darin, daß sie nicht mit der gesamten Fläche des Haltebandes, sondern nur mit den seitlich über das Halteband nach unten vorstehenden Klemmbereichen der Sockel auf der Folie auf liegen, was zu einer insgesamt instabileren Anordnung und zu einer erhöhten Rißgefahr der Folie führt.

Der Erfindung liegt die Aufgabe zugrunde, eine Fixiervorrichtung der eingangs genannten Art zu schaffen, die eine möglichst tiefe Anordnung der Fußbodenheizungsrohre im Estrich und ein sattes Aufliegen der Fixiervorrichtung auf der darunterliegenden Auf lageebene ermöglicht.

Diese Aufgabe wird erfindungsgemäß durch die Merkmale des Anspruchs 1 gelöst. Vorteilhafte Ausführungsformen der Erfindung sind in den weiteren Ansprüchen angegeben.

Bei der erfindungsgemäßen Fixiervorrichtung sind die Sokkel in einem Hohlraum des Haltebandes im Bereich zwischen der Oberseite und der unteren Auflageebene des Haltebandes anordenbar.

Die erfindungsgemäße Fixiervorrichtung bietet den Vorteil, daß die Sockel der Klips die Gesamthöhe der Fixiervorrichtung nicht mehr erhöhen, da die Sockel innerhalb des Haltebandes angeordnet sind. Der Abstand zwischen Auflageebene, beispielsweise Folie, und Fußbodenheizungsrohre wird daher verringert. Dies führt zu einer Verringerung der Gesamtdicke des Estrichs und damit zu einer entsprechenden Kostenersparnis. Ein weiterer Vorteil ist, daß das gesamte Halteband großflächig auf der darunterliegenden Ebene aufliegt, so daß eine stabile Anordnung geschaffen wird und die Gefahr vermieden wird, die darunterliegende Folie einzureißen.

Gemäß einer vorteilhaften Ausführungsform weist das Halteband eine Vielzahl von in Längsrichtung beabstandeter Ausnehmungen auf, in welche die Sockel der Klips einführbar sind.

Gemäß einer vorteilhaften Ausführungsform weisen die Haltelaschen im Übergangsbereich zum Sockel einen verjüngten Bereich auf, mit dem das Halteband in Eingriff bringbar ist. Zweckmäßigerweise wird dieser verjüngte Bereich durch entsprechende Rastkerben im Fußbereich der Haltelaschen gebildet. Die Klips können in diesem Fall von unten her in die Ausnehmungen eingeführt werden, wobei die Haltelaschen geringfügig zusammengedrückt werden. Befindet sich der Sockel vollständig innerhalb des Haltebands, greift der die Ausnehmungen umgebende Bereich des Haltebands in den verjüngten Bereich der Haltelaschen ein, so daß sich die Haltelaschen wieder spreizen können und die Klips sowohl nach oben als auch nach unten arretiert sind.

Gemäß einer Ausführungsvariante sind am Sockel seitlich vorspringende Nasen vorgesehen. Das Halteband weist Aussparungen auf, die sich von den Ausnehmungen seitlich nach außen erstrecken und an die Form der Nasen angepaßt sind, so daß der Sockel mit den Nasen von oben durch die Ausnehmung hindurchführbar und die Nasen in eine das Halteband von unten hintergreifende Stellung bringbar sind. In diesem Fall können die Klips mit dem Sockel von oben her in das Halteband eingesetzt und durch eine Drehung um die Hochachse gegen ein Abheben verriegelt werden.

Vorteilhafterweise sind die Ausnehmungen des Haltebands und die Sockel der Klips kreisförmig ausgebildet. In diesem Fall können die Klips auf dem Halteband um ihre Hochachse gedreht werden, so daß die Fußbodenheizungsrohre auch in unterschiedlichen Winkeln zu den Haltebändern verlegt werden können.

Die Erfindung wird nachfolgend anhand der Zeichnungen beispielhaft näher erläutert. In diesen zeigen:
- Figur 1 :: eine erste Ausführungsform der erfindungsgemäßen Fixiervorrichtung, wobei Halteband und Klip getrennt dargestellt sind,
- Figur 2 :: die Fixiervorrichtung von Figur 1 in montiertem Zustand mit eingesetztem Heizungsrohrstück,
- Figur 3 :: eine stirnseitige Ansicht des Haltebands von Figur 2, wobei der Klip um 90° verdreht dargestellt ist,
- Figur 4 :: eine zweite Ausführungsform der erfindungsgemäßen Fixiervorrichtung, wobei Halteband und Klip getrennt dargestellt sind,
- Figur 5 :: die Fixiervorrichtung von Figur 4 in montiertem Zustand, wobei ein Heizungsrohrstück eingesetzt ist,
- Figur 6 :: eine stirnseitige Ansicht des Haltebands und Klips von Figur 5,
- Figur 7 :: eine dritte Ausführungsform der erfindungsgemäßen Fixiervorrichtung, wobei Halteband und Klip getrennt dargestellt sind,
- Figur 8 :: die Fixiervorrichtung von Figur 7 mit eingesetztem Klip, und
- Figur 9 :: eine vierte Ausführungsform der erfindungsgemäßen Fixiervorrichtung, wobei Halteband und Klip getrennt dargestellt sind.

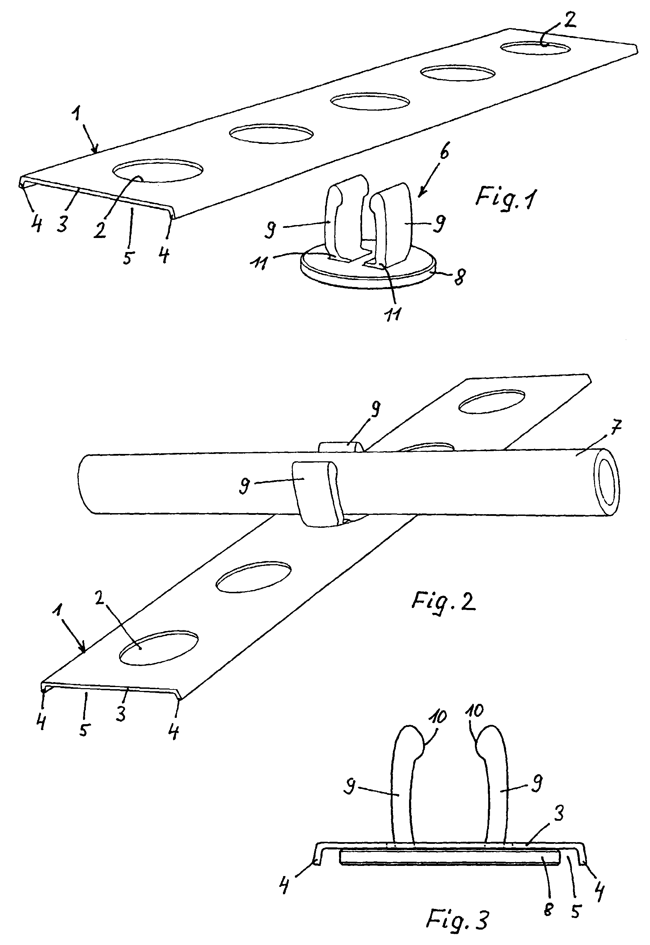

Anhand der Figuren 1 bis 3 wird zunächst eine erste Ausführungsform der erfindungsgemäßen Fixiervorrichtung beschrieben.

Die dargestellte Fixiervorrichtung besteht aus einem ebenen, geradlinigen Halteband 1 aus Kunststoff oder Metall, dessen Ränder nach unten abgebogen sind. Die Breite des Haltebands 1 beträgt beispielsweise 5 cm, während ihre Gesamthöhe beispielsweise 4 mm beträgt. Die Länge des Haltebands 1 kann mehrere Meter betragen.

Das Halteband 1 weist mittige und in Längsrichtung hintereinander angeordnete kreisförmige Ausnehmungen 2 auf. Beispielsweise ist es möglich, alle fünf Zentimeter eine derartige Ausnehmung 2 vorzusehen. Die Ausnehmungen 2 durchdringen den ebenen mittleren Bereich 3 des Haltebands 1 vollständig.

Aufgrund der nach unten abgebogenen Randbereiche 4 des Haltebands 1 liegt dieses nur in den Randbereichen 4 auf dem darunterliegenden Boden auf, während der ebene mittlere Bereich 3 zum Boden beabstandet ist. Auf diese Weise wird zwischen den Randbereichen 4 und unterhalb des ebenen mittleren Bereichs 3 ein in Längsrichtung durchgehender Hohlraum 5 geschaffen.

In die Ausnehmungen 2 können von unten her Klips 6 zur Halterung von Heizungsrohren 7 eingeführt werden. Die Klips 6 bestehen aus einem Sockel 8 und zwei sich vom Sockel 8 aus nach oben erstreckenden, gegenüberliegenden flexiblen Haltelaschen 9.

Der Sockel 8 ist in der Form einer ebenen Kreisscheibe ausgebildet, wobei der Durchmesser des Sockels 8 größer ist als der Durchmesser der Ausnehmungen 2. Die Höhe des Sockels 8 ist derart bemessen, daß sie nicht höher ist als die Höhe des Hohlraums 5. Zweckmäßigerweise entspricht die Höhe des Sockels 8 genau der Höhe des Hohlraums 5.

Die Haltelaschen 9 weisen eine derartige Länge auf, daß sie beim montierten Klip 6 so weit über das Halteband 1 nach oben vorstehen, daß das Heizungsrohr 7 von oben her zwischen die Haltelaschen 9 eingeführt werden kann und von diesen gehalten wird. Am oberen Ende weisen die Haltelaschen 9 auf ihrer Innenseite Wulste 10 auf, welche den Einführraum für das Heizungsrohr 7 verengen. Diese Wulste 10 hintergreifen das eingeklipste Heizungsrohr 7 von oben, so daß es sicher zwischen den Haltelaschen 9 gehalten wird.

Die Haltelaschen 9 sind derart angeordnet und weisen eine derartige Breite auf, daß sie von unten her durch die Ausnehmungen 2 hindurchgeführt werden können, wobei sie geringfügig zusammengedrückt werden. Während die Haltelaschen 9 über den Großteil ihrer Länge eine gleichmäßige Breite aufweisen, sind sie jedoch in unmittelbarer Nachbarschaft zum Sockel 8 etwas weniger breit ausgeführt, so daß sie dort einen verjüngten Bereich 11 aufweisen. Ist der Klip 6 von unten her so weit wie möglich durch die Ausnehmung 2 hindurch in das Halteband 1 eingesteckt worden, wobei der Sockel 8 von unten her am mittleren Bereich 3 anliegt, befindet sich das Halteband 1 mit seinem mittleren Bereich 3 auf gleicher Höhe wie der verjüngte Bereich 11 der Haltelaschen 9. Die beim Einführen geringfügig zusammengedrückten Haltelaschen 9 können sich daher wieder in die ursprüngliche, nicht zusammengedrückte Stellung zurückbewegen. Die etwas größere Breite der Haltelaschen 9 oberhalb des verjüngten Bereichs 11 verhindert somit, daß die Klips 6 nach ihrer Montage wieder nach unten herausfallen.

Wie aus Figur 3 ersichtlich, befindet sich der Sockel 8 im montierten Zustand vollkommen innerhalb des Hohlraums 5. Die untere Seite des Sockels 8 befindet sich auf gleicher Höhe wie das untere Ende der abgebogenen Randbereiche 4 des Haltebands 1. Druck, der über die Heizungsrohre 7 auf den Klip 6 aufgebracht wird, wird somit großflächig auf den darunterliegenden Boden übertragen.

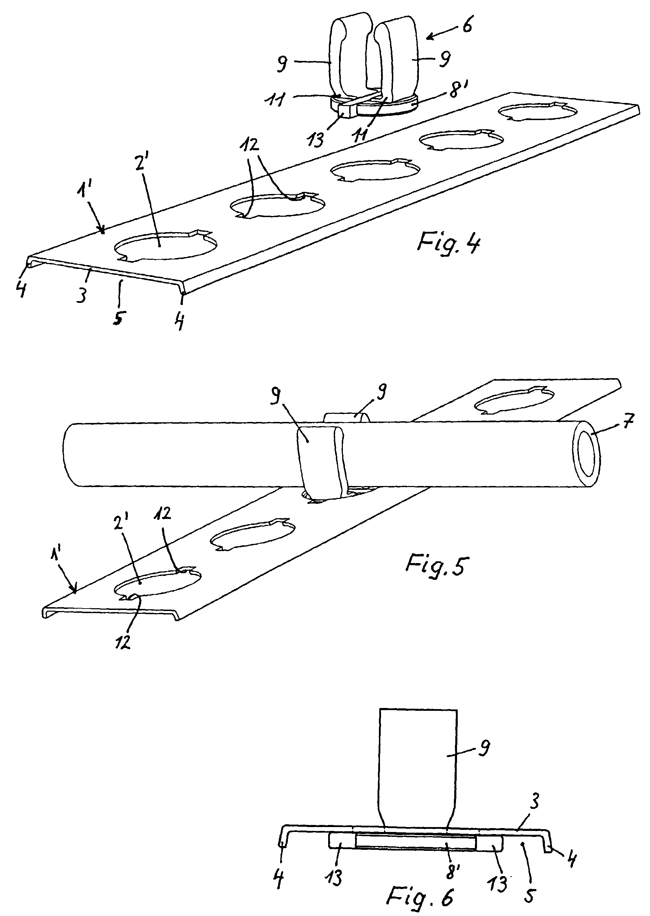

Anhand der Figuren 4 bis 6 wird im folgenden ein zweites Ausführungsbeispiel der erfindungsgemäßen Fixiervorrichtung beschrieben.

Bei dieser Ausführungsform ist ein Halteband 1' vorgesehen, das in ganz ähnlicher Weise wie das Halteband 1 der ersten Ausführungsform ausgebildet ist. Die Ausnehmungen 2' des Haltebands 1' sowie die Sockel 8' der Klips 6 sind jedoch derart modifiziert, daß die Klips 6 von oben her in die Ausnehmungen 2' eingesetzt werden können. Dies wird dadurch erreicht, daß die Ausnehmungen 2' einen geringfügig größeren Durchmesser als die Sockel 8' der Klips 6 haben. Die Ausnehmungen 2' weisen jedoch zwei gegenüberliegende, sich radial nach außen erstreckende, nutförmige Aussparungen 12 auf, während die Sockel 8' der Klips 6 entsprechend geformte, radial nach außen vorstehende Nasen 13 haben. Der Sockel 8' kann somit mit seinen Nasen 13 von oben durch die Ausnehmungen 2' und nutförmigen Aussparungen 12 hindurch in den Hohlraum 5 eingeführt werden. Nach dem Einführen werden die Klips 6 um einen bestimmten Winkel, beispielsweise 90°, gedreht, so daß die Nasen 13 in eine das Halteband 1 von unten hintergreifende Stellung gebracht werden. Ein Herausziehen der Klips 6 ohne eine erneute Drehung in die ursprüngliche Einsetzstellung ist somit nicht mehr möglich.

Auch bei dieser Ausführungsform ist es zweckmäßig, wenn die Haltelaschen 9 in ihrem Fußbereich den verjüngten Bereich 11 aufweisen, der auf den Durchmesser der Ausnehmungen 2' abgestimmt ist. Oberhalb dieses verjüngten Bereichs 11 sind die Haltelaschen 9 wiederum etwas breiter ausgeführt, so daß die Klips 6 nicht nach unten durchfallen können.

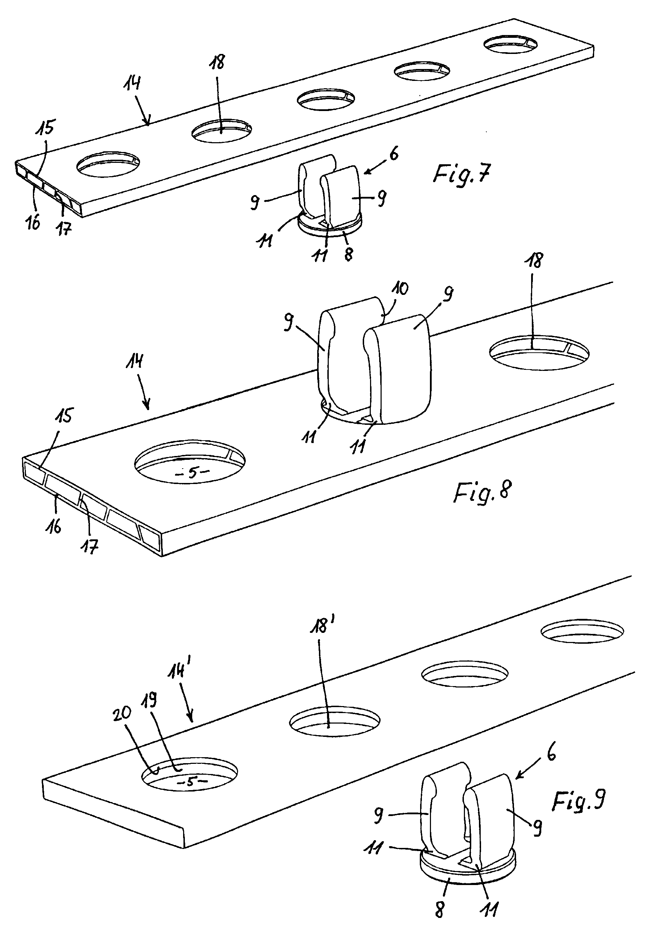

Anhand der Figuren 7 und 8 wird im folgenden eine dritte Ausführungsform der erfindungsgemäßen Fixiervorrichtung beschrieben. Diese Ausführungsform ähnelt im wesentlichen der ersten Ausführungsform, wobei die Klips 6 identisch sind. Im Unterschied hierzu ist jedoch ein Halteband 14 vorgesehen, das nicht einen U-förmigen Querschnitt aufweist, sondern aus einem länglichen, ebenen Hohlkörperprofil mit einer ebenen oberen Wand 15 und einer hierzu parallelen, ebenen unteren Wand 16 besteht. Die Formstabilität des Haltebands 14 wird durch innenliegende Stege 17 erhöht. In der oberen Wand 15 des Haltebands 14 sind bei dieser Ausführungsform wiederum Ausnehmungen 2 eingebracht, die den Ausnehmungen 2 der ersten Ausführungsform entsprechen und einen Durchmesser haben, der kleiner als derjenige des Sockels 8 ist. In der unteren Wand 16 des Haltebands 14 sind dagegen kreisförmige Ausnehmungen 18 vorgesehen, die zu den Ausnehmungen 2 fluchten und einen Durchmesser haben, der geringfügig größer als derjenige des Sockels 8 ist. Die Klips 6 können dadurch von unten her in die Ausnehmungen 18, 2 eingeführt werden, bis der Sockel 8 von unten her an der oberen Wand 15 des Haltebands 14 anstößt. In diesem Zustand liegt der Sockel 8 wiederum vollständig im Hohlraum 5, der zwischen der oberen Wand 15 und der unteren Wand 16 des Haltebands 14 gebildet ist.

Anhand von Figur 9 wird im folgenden eine vierte Ausführungsform der erfindungsgemäßen Fixiervorrichtung beschrieben. Bei dieser Ausführungsform sind die Klips 6 wiederum identisch zu denjenigen der ersten bzw. dritten Ausführungsform. Im Unterschied hierzu ist jedoch ein Halteband 14' vorgesehen, das aus einem ebenen, leistenförmigen Vollmaterial besteht. Das Halteband 14' weist wiederum durchgehende, im Durchmesser jedoch gestufte Ausnehmungen 18' auf, in welche die Klips 6 von unten her eingeführt werden können. Der untere Abschnitt 19 der Ausnehmungen 18' weist einen Durchmesser auf, der geringfügig größer als derjenige des Sockels 8 ist. Der obere Abschnitt 20 der Ausnehmungen 18' weist dagegen wiederum einen Durchmesser auf, der kleiner als derjenige des Sockels 8 ist und demjenigen der Ausnehmungen 2 der ersten und dritten Ausführungsform entspricht. Im montierten Zustand liegt der Sockel 8 daher wiederum vollständig im Hohlraum 5, der durch den unteren Abschnitt 19 der Ausnehmungen 18' gebildet wird. Die Unterseite des Sockels 8 steht in diesem Zustand somit nicht über die Unterseite des Haltebands 14' vor.

Bei allen Ausführungsformen ist es von Vorteil, daß der Sockel 8 der Klips 6 vollständig innerhalb der Haltebänder 1, 1', 14, 14' angeordnet ist, so daß die Gesamtbauhöhe der Fixiervorrichtung verringert wird. Im montierten Zustand liegen die Heizungsrohre 7 direkt auf der Oberseite des Haltebands 1, 1', 14, 14' auf. Ein weiterer Vorteil liegt darin, daß die Klips 6 auch im montierten Zustand um ihre Hochachse gedreht werden können, so daß die Heizungsrohre 7 nicht nur in einem Winkel von 90° zu den Haltebändern 1, 1', 14, 14', sondern in einem hierzu unterschiedlichen Winkel fixiert werden können.

Zweckmäßigerweise bestehen die Haltebänder 1, 1', 14, 14' sowie die Klips 6 aus einem Kunststoffmaterial. Es ist jedoch auch ohne weiteres möglich, die Haltebänder 1, 1', 14, 14' aus einem anderen Material, beispielsweise Metall wie Aluminium oder Stahlblech, herzustellen. Weiterhin ist es möglich, die Haltebänder 1, 1', 14, 14' mit Sollbruchstellen zwischen den Ausnehmungen 2, 2', 18, 18' zu versehen, um die Haltebänder 1, 1', 14, 14' manuell auf die gewünschte Länge abbrechen zu können.

## Patentansprüche

1. Fixiervorrichtung für Fußbodenheizungsrohre, mit einem Halteband (1, 1', 14, 14'), auf dem in Längsrichtung beabstandet eine Mehrzahl von Klips (6) zur Halterung der Heizungsrohre (7) befestigbar sind, wobei die Klips (6) einen Sockel (8, 8') und zwei sich vom Sockel (8, 8') aus nach oben erstreckende, gegenüberliegende Haltelaschen (9) aufweisen, **dadurch gekennzeichnet**, daß die Sockel (8, 8') in einem Hohlraum (5) des Haltebandes (1, 1', 14, 14') im Bereich zwischen der Oberseite und der unteren Auflageebene des Haltebandes (1, 1', 14, 14') anordenbar sind.

2. Fixiervorrichtung nach Anspruch 1, **dadurch gekennzeichnet**, daß das Halteband (1, 1', 14, 14') eine Vielzahl von in Längsrichtung beabstandeter Ausnehmungen (2', 18, 18') aufweist, in welche die Sockel (8) der Klips (6) einführbar sind.

3. Fixiervorrichtung nach einem der vorhergehenden Ansprüche, **dadurch gekennzeichnet**, daß die Haltelaschen (9) im Übergangsbereich zum Sockel (8, 8') einen verjüngten Bereich (11) aufweisen, mit dem das Halteband (1, 1', 14, 14') in Eingriff bringbar ist.

4. Fixiervorrichtung nach einem der vorhergehenden Ansprüche, **dadurch gekennzeichnet**, daß das Halteband (1, 1') einwandig mit einem U-förmigen Querschnitt ausgebildet ist.

5. Fixiervorrichtung nach einem der Ansprüche 2 bis 4, **dadurch gekennzeichnet**, daß die Haltebänder (1, 14, 14') einen nach unten offenen Hohlraum (5) sowie Ausnehmungen (2, 18, 18' ) zum Durchtritt der Haltelaschen (9) aufweisen, so daß die Klips (6) von der Unterseite des Haltebandes (1, 14, 14') her in die Ausnehmungen (2, 18, 18') einführbar sind.

6. Fixiervorrichtung nach einem der vorhergehenden Ansprüche, **dadurch gekennzeichnet**, daß das Halteband (18) aus einem Hohlelement mit einer oberen Wand (15) und einer unteren Wand (16) besteht, wobei der Durchmesser der Ausnehmungen (18) in der oberen Wand (15) kleiner als der Durchmesser der Ausnehmungen (18) in der unteren Wand (16) ist.

7. Fixiervorrichtung nach einem der Ansprüche 2 bis 5, **dadurch gekennzeichnet**, daß am Sockel (8') seitlich vorspringende Nasen (13) vorgesehen sind und das Halteband (1') nutförmige Aussparungen (12) aufweist, die sich von den Ausnehmungen (2') seitlich nach außen erstrecken und an die Form der Nasen (13) angepaßt sind, so daß der Sockel (8') mit den Nasen (13) von oben durch die Ausnehmung (2') hindurchführbar und die Nasen (13) in eine das Halteband (1') von unten hintergreifende Stellung bringbar sind.

8. Fixiervorrichtung nach einem der Ansprüche 2 bis 7, **dadurch gekennzeichnet**, daß die Ausnehmungen (2, 2', 18, 18') der Haltebänder (1, 1', 14, 14') und die Sockel (8, 8') der Klips (6) kreisförmig ausgebildet sind.
